# EUROPEAN PATENT APPLICATION

(11) **EP 0 932 070 A1**
(43) Date of publication of application: **28.07.1999**
(21) Application number: 98101135.6
(22) Date of filing: 23.01.1998
(51) Int. Cl.: G02F 1/13

(54) **An apparatus comprising a display, and a display for such an apparatus**

(71) Applicant: ROBERT BOSCH GMBH, 70442 Stuttgart (DE)
(72) Inventor: Jagielski, Ole, 9220 Aalborg (DK)

(57) **Abstract**

An apparatus (1) and a display (5;13) constructed to provide protection against electrostatic discharge. The apparatus (1) comprises a number of electronic components (3), electrical conductive shielding means (4) enclosing at least some of the electronic components (3). The apparatus also comprises a display (5;13) positioned outside the shielding means (4), said display (5;13) having a first side facing away from the apparatus (1) and a second side facing the apparatus (1), and having a conductive surface. The apparatus (1) further comprises signalling lines (6) which form electrical connections between at least some of the electronic components (3) enclosed by the shielding means (4) and the display (5;13). The conductive surface (15,16) is located on said second side of the display (5;13) and is connected to said shielding means (4) via an electrical conductor (17).

## Description

The present invention relates to an apparatus comprising a display and a display for such an apparatus. More specifically, the present invention relates to an apparatus and a display that provides protection against malfunction and destruction of the display unit and electronic components in the apparatus.

It is desirable to construct electronic devices capable of resisting electrostatic discharge (ESD). The reason is that an electrostatic discharge on a device may cause malfunction of the device and at worst case destruction of electronic components in the device. To avoid this, at least some of the electronic components of the device are shielded so that the device can resist the impact of an electronic discharge. Typically, the ESD sensitive components are shielded so that the electronic device can satisfy some given ESD specifications.

Electronic devices will typically also be shielded with respect to electromagnetic control (EMC) so as to create a barrier against electromagnetic radiation. As a result of this shielding, the shielded components in the device concerned will be protected against electromagnetic radiation, and other electronic devices will be protected against electromagnetic radiation from the device concerned. Shielding against EMC also has the advantage that it provides shielding against ESD and will often be sufficient to counteract said malfunction or destruction of electronic components in the device.

Shielding in an electronic device is frequently provided by using electronic conducting shielding in order to achieve said shielding against EMC and ESD. Owing to EMC shielding, it is not possible to make holes in the shield that exceed a size determined by the wavelength of the electromagnetic radiation against which shielding is desired. For electronic devices comprising a display, it is therefore necessary to place the display outside the shield, because, typically, it is not possible to make a sufficiently large hole in the shield for the display to be placed within the cabinet, while being visible to the user of the device. The display is therefore placed outside the shield, and signalling lines are run from at least some of the electronic components, which are positioned inside the shield, to the display. The positioning of the display outside the conductive shield, however, gives rise to a problem in connection with ESD. This will be explained more fully below.

If the electronic device having electronic shielding is positioned e.g. near a conductive plane, then an electrostatic discharge on the device will cause the fed charge to be distributed throughout the conductive surface facing the conductive plane because of the capacitive coupling between the conducting shield and the conductive plane. Opposite charges will be distributed on the conductive plane. The density of the distribution of these charges is related to the capacity between the conductive plane and each specific part of the conductive surface of the unit.

As the display is often located at the very front of the apparatus, this is where the charge will distribute. As the electrical connection between the display and the rest of the unit goes through signalling lines, which of-ten connect directly to ESD sensitive components, a flow of charges can occur in the signalling lines as a result of an electrostatic discharge. This is undesirable, as it gives rise to problems, as the current may cause malfunction of the electronic device and, at worst, cause destruction of components which are sensitive to electrostatic discharge.

A conventional solution of the problem is to make the inner side of the cabinet electrically conductive e.g. by providing it with a metal foil or by metallizing it to provide a greater capacitive coupling to said conductive plane. When electrical contact is made between the electrically conductive surface in the cabinet and the shield of the device, the increased capacitive effect is obtained as a result of the greater surface area and the reduced distance to said conducting plane.

The foil may e.g. be mounted so as to cover part of the display. This results, in greater capacitive coupling partly because of the greater area and partly because of the closer position between the conducting surfaces. The foil is connected to the other conducting surfaces to provide electrical contact between these. The use of the metal foil, however, has the drawback that it has to mounted in the cabinet as an additional component. Furthermore, the design of the toil depends on the design of the cabinet concerned, and therefore has to be adapted to the cabinet concerned. Another drawback is that it is typically necessary to mount the foil by hand, which is inexpedient for mass production purposes. This solution is thus frequently costly. Likewise, the metallization of the inner side of the cabinet is costly. The above-mentioned solutions have the further drawback that the effect of the shielding decreases as the area of the display increases. That is, this solution has a small effect, when the area display constitutes a major part of the total area of the surface of the apparatus.

It is also well-known to place a conducting grid on the front of the display or in a lens in front of the display and connect it with said foil or metallization. It is necessary to construct this grid so that it is so thin that it cannot be seen when the user looks at the display. This shielding has the drawback of involving high production cost. The grid has the further drawback that it results in an undesired toning of the display.

In accordance with the invention, it is the object to provide a ESD protection for an apparatus comprising electronic components; electrical conductive shielding means enclosing at least some of the electronic components; a display positioned outside the shielding means, said display having a first side facing away from the apparatus and a second side facing the apparatus; a conductive surface positioned on said display; and signalling lines which form electrical connections between at least some of the electronic components enclosed by the shielding means and the display.

This is achieved in that said conductive surface is located on said second side of the display and is connected to said shielding means via an electrical conductor. Hereby, protection against malfunction and destruction of the display and electronic components in the apparatus iS achieved, as the conductive surface on the display forms a capacitive coupling to the conductive plane in the apparatus.

A display or an apparatus in accordance with the invention has the advantage that it provides the above-mentioned protection in a way that facilitates the assembly of the device, as the display contains all the components needed to perform the ESD protection. Therefore, the display can directly be mounted in any given apparatus and directly provide the desired ESD protection. As the construction is simple, the ESD protection can be obtained at low cost.

As stated in claim 2, an advantageous embodiment is achieved when said conductive surface on said second side of the display is formed as a grid. This embodiment is advantageous as it permits illumination of the display from the back side, which is often of interest.

An advantageous embodiment is achieved, as stated in claim 3, when a part of the first side of the display comprises conductive means electrically connected to the conductive surface on said second side of the display, as the capacity between the conductive surfaces forming the shield and a conductive plane is increased.

In a preferred embodiment, said electrical conductor has a low impedance which permits a rapid flow of charges to the conductive surfaces on the display. As a result, the display and the electrostatic discharge sensitive components in the apparatus are therefore protected. The combination of the low impedance of said electrical conductor, and the large capacitance between said electrical surfaces on the display and the conductive plane lead to the desired behaviour. That is, firstly a flow of charges to the conductive surfaces on the display and secondly a distribution of the charges determined by the capacitance. Hereby, an ESD protection of the electrical apparatus is obtained.

An advantageous embodiment is achieved, as stated in claim 5, when said electrical conductor and said signalling lines are integrated in a common conductor means, which facilitates the mounting of the display in the apparatus.

An advantageous embodiment is achieved, as stated in claim 6, when said common conductor means comprises a flexible printed circuit board with first and second sides, said electrical conductor being arranged on said first side of the flexible printed circuit board, said signalling lines being arranged on said second side of the flexible printed circuit board. This type of a conductor means is very simple to fabricate and can therefore be produced at low cost.

Claim 7 defines a display for displaying information, said display having a front side from which the information can be seen, and a back side positioned opposite to the front side. The back side of the display is provided with a conductive surface, which permits electrical connection to an electrically conducting shield in the apparatus in which the display is mounted, and hereby permits protection of the display and electronic components in the apparatus from overload due to electrostatic discharge.

As stated in claim 8, an advantageous embodiment of a display according to the invention is achieved when said conductive surface on the back side of the display is formed as a grid. This embodiment is advantageous as it permits illumination of the display from the back side.

As stated in claim 9, an advantageous embodiment is achieved when a part of the front side of the display comprises conductive means electrically connected to the conductive surface on the back side of the display, as the capacity between the conductive surfaces forming the shield and a conductive plane is increased.

The invention will now be described by way of example and with reference to the accompanying drawings in which:
fig. 1 illustrates the problem of electrostatic discharge by way of an example,
fig. 2a is a front view of a display according to the invention, and
fig. 2b is a back view of a display according to the invention.

The figures are schematic and simplified for clarity, and they just show details which are essential to the understanding of the invention, while other details are left out. The same reference numerals are used throughout for identical or corresponding parts.

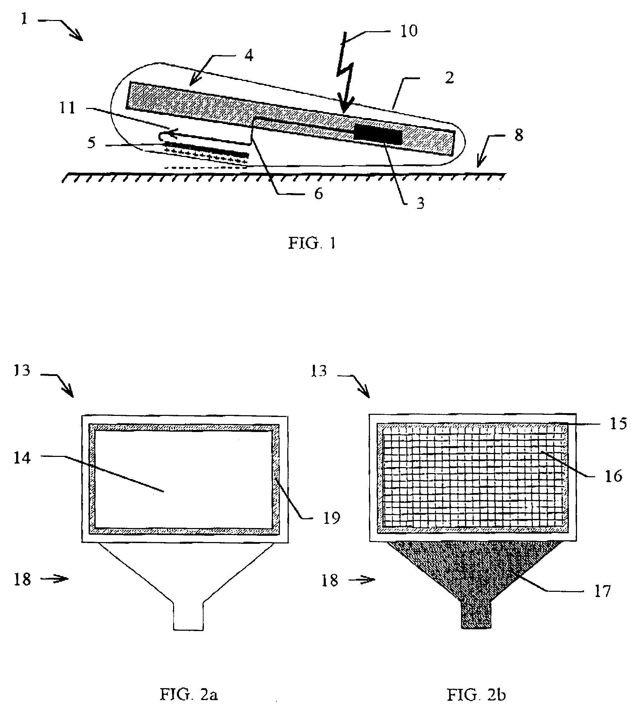

Fig. 1 illustrated the problem of electrostatic discharge for an electronic apparatus containing a display.

An electrical apparatus containing a display is often sensitive to an electrostatic discharge, as the display is often connected directly to ESD sensitive parts within the apparatus. This problem is described in the following.

The figure shows an electronic apparatus 1 with a housing 2, which comprises a number of electrical components 3, electrically conducting shielding means 4 enclosing at least some of the electronic components 3, a display 5 positioned outside the shield 4, and signalling lines 6 which form electrical connections between the display and at least some of the electronic components 3 enclosed by the shield 4.

In order to determine the effect of an electrostatic discharge on an apparatus it may be tested in the following way. Testing of the ESD shielding of an electronic apparatus 1 is typically performed in the development phase by placing the apparatus 1 on a conducting plane 8, which is frequently called a coupling plane. In order to lest the effect of an electrostatic discharge on the display 5, the apparatus 1 is placed with the display 5 facing the coupling plane 8.

The test is performed by making a electrostatic discharge on a conducting part of the apparatus 1. The electrostatic discharge is illustrated by way of an arrow 10. When an ESD pulse strikes the apparatus 1, the charges will be distributed throughout the conducting surface facing the coupling plane. Opposite charges will be distributed on the coupling plane 8.

The density of the distribution of these charges is related to the capacity between the coupling plane 8 and each specific part of the conducting surface of the apparatus 1. The capacity between a given conducting surface of the apparatus 1 and the coupling plane 8 is dependent on the area of the conducting surface and the distance between the said conducting surface and the coupling plane 8. As the display 5 is located at the very front of the apparatus 1 and includes conductive elements, it will typically result in a relative large capacitance. As a result, the electrostatic discharge on the apparatus 1 will result in a flow of charge to the display 5. The flow of charges to the display is illustrated by use of the arrow 11. Said distribution of charge on the display 5 and on the part of the conducting plane 8 located near the display 5 is illustrated by '+' and '-' symbols. The distribution of charge on the remaining parts of the conducting surfaces is not shown.

The electrical connection between the display 5 and the rest of the unit goes through signalling lines which are often connected directly to ESD sensitive components in the apparatus. These components may either be placed in connection with the display or be positioned inside the conducting shield and be connected to the display via signalling lines. The charge current may cause malfunction and at worst destruction of ESD sensitive components. The following figures show a solution to this problem according to the invention.

Figs. 2a and fig. 2b show an example of how a display can be made to protect the unit against ESD according to the invention. Figs. 2a and 2b show the front part and the back part of the display, respectively.

The basic idea is to protect the display and circuitry inside the unit by avoiding or reducing the flow of charges in the signalling lines caused by an electrostatic discharge.

The display means 13 comprises a display screen 14 and a number of elements controlling the display. In order to simplify the figure, these elements are not illustrated. It should be mentioned that the display 13 shown may be a LCD display, but it may be a display of another type as well.

In order to protect the apparatus in which the display is mounted from the destructive effect of an electrostatic discharge, a electrically conducting surface 16 is located on the back side of the display 13, i.e. the side of the display facing the apparatus 1. The conducting surface 16 is formed as a conducting grid in order to be transparent to light, which is of interest as it permits illumination of the display 13 from the back side. It should be stressed that the conducting surface 16 could have another structure if desired, as long as the desired conductive effect is provided. In a preferred embodiment, the part of the conducting surface 16 located outside the visual area of the display screen 14 contains a continuous surface 15. For example, the surface 15 can be formed as a continuous surface in order to increase the capacitance between the conducting surface 16 and a coupling plane 8. It is noted, that surface 15 can also be formed in a number of other ways.

The conducting surface 16 is electrically connected to an electrical conductor 17, which may be used to connect the conducting surface 16 to other electrical shielding means when mounting the display in an electrical apparatus. In a preferred embodiment, the electrical conductor 17 is formed as a conductor on one side of a flexible printed circuit board 18, but could have been implemented in a number of ways according to the prior art. The main purpose of the conductor 17 is to form a low impedance connection to said other shielding means. Hereby it is ensured that the necessary flow of charges can occur during a electrostatic discharge on the apparatus, in order to protect the apparatus and the display against the undesired destructive effects.

A number of signalling lines, which connect the display to a number of electronic components in the apparatus, are located on the opposite side of the flexible printed circuit board 18. These signalling lines are not shown in order to simplify the figure.

In a preferred embodiment, the surface 15 is connected to a similar conducting surface 19 on the front side of the display. This is done in order to increase the capacitance between the shielding in the apparatus and the coupling plane 8.

The integration of the display, the conducting means on the display, the electrical conductor between the conducting surfaces in the display and the shielding, and the signalling lines is advantageous, as it provides protection of the display and the electronic components in the apparatus in which the display is installed. There is no need for additional ESD protection, which reduces production cost in the production of an electronic apparatus with a display.

It is noted that, the protection against electrostatic discharge according to the invention does not alter the circuitry of the unit, and therefore it does not have any effect on the functionality of the apparatus. No additional electrostatic components are needed, thereby saving costs and space. Additionally, no metallized surface or metal foil in the front part of the apparatus is needed.

It should be stressed that the invention is not restricted to the embodiment shown, but may be embodied in other ways within the scope of the subject-matter defined in the following claims. For example, the conducting surface may be formed as a continuous surface, and the electrical conductor between the conducting surfaces in the display and the shielding may be spaced from the signalling lines to the display.

## Claims

1. An apparatus (1) comprising
• electronic components (3),
• electrical conductive shielding means (4) enclosing at least some of the electronic components (3),
• a display (5;13) positioned outside the shielding means (4), said display (5;13) having a first side facing away from the apparatus (1) and a second side facing the apparatus (1),
• a conducive surface (15,16) positioned on said display (5;13),
• and signalling lines (6) which form electrical connections between at least some of the electronic components (3) enclosed by the shielding means (4) and the display (5:13),
**characterized** in that said conductive surface (16) is located on said second side of the display (5;13) and is connected to said shielding means (16) via an electrical conductor (17).

2. An apparatus according to claim 1, **characterized** in that said conductive surface (15,16) on said second side of the display (5;1) is formed as a grid.

3. An apparatus according to claim 2, **characterized** in that a part of the first side of the display (5;13) comprises conductive means (19) electrically connected to the conductive surface (15,16) on said second side of the display (5;13).

4. An apparatus according to any of the preceding claims, **characterized** in that said electrical conductor (17) has a low impedance.

5. An apparatus according to claim 4, **characterized** in that said electrical conductor (17) and said signalling lines are integrated in a common conductor means (18).

6. An apparatus according to claim 5, **characterised** in that said common conductor means (18) comprises a flexible printed circuit board with first and second sides, said electrical conductor (17) being arranged on said first side of the flexible printed circuit board, said signalling lines being arranged on said second side of the flexible printed circuit board.

7. A display (13) for displaying information and having a front side from which the information may be seen, and a back side positioned opposite to the front side, **characterized** in that the back side of the display (13) is provided with a conductive surface (15,16).

8. A display according to claim 7, **characterized** in that said conductive surface (15,16) on the back side of the display (13) is formed as a grid.

9. A display according to claim 8, **characterized** in that a part of the front side of the display (13) comprises conductive means (19) electrically connected to the conductive surface on the back side of the display (13).
